# EUROPÄISCHE PATENTSCHRIFT

(11) **EP 0 582 777 B1**
(45) Veröffentlichungstag und Bekanntmachung des Hinweises auf die Patenterteilung: **29.01.1997**
(21) Anmeldenummer: 93106209.5
(22) Anmeldetag: 16.04.1993
(51) Int. Cl.: H02K 5/22

(54) **Motoranschlussblock, insbesondere für Elektromotoren**
Motor connection box, in particular for electric motors
Boîte de connexion de moteur, en particulier pour moteurs électriques

(30) Priorität: 15.05.1992 DE 4216036
(43) Veröffentlichungstag der Anmeldung: 16.02.1994
(73) Patentinhaber: SEW-EURODRIVE GMBH & CO., D-76642 Bruchsal (DE)
(72) Erfinder: Meiser, Karl-Heinz, Dr., W-7520 Bruchsal (DE); Huber, Martin, W-7520 Bruchsal (DE)
(74) Vertreter: Dipl.-Ing. Heiner Lichti Dipl.-Phys. Dr.rer.nat. Jost Lempert Dipl.-Ing. Hartmut Lasch

(56) Entgegenhaltungen:
- CH-A- 177 721
- DE-A- 2 923 456
- GB-A- 960 831
- US-A- 4 695 117

## Beschreibung

Die Erfindung betrifft einen Motoranschlußblock mit einem Stecker- und einem Buchseneinsatz nach dem Oberbegriff des Anspruchs 1.

Die GB-A-960 831 zeigt einen dreiphasigen Pumpenmotor, dessen Motorgehäuse mit dem Unterteil einer Steckkontakteinrichtung verbunden ist. Ein mit dem Unterteil verbundenes Oberteil weist Buchsen auf und ist mit der Anschlußleitung verbunden. Je nach Verdrahtung des Oberteils kann der Motor in Stern- bzw. Dreieckschaltung betrieben werden. Die Motorwicklungen werden an den Stiften auf der den Steckkontakten gegenüberliegenden Seite der Stifte durch Verschrauben festgeklemmt. Hierzu ist das Unterteil an seinem dem Motorgehäuse zugewandten Ende geöffnet ausgebildet. Das die Buchsen aufweisende Oberteil wird durch zwei Gehäuseteile ausgebildet und weist eine Öffnung zur Durchführung des Hauptanschlußkabels mit den Anschlußleitungen auf. Nachteilig bei dieser Ausführung ist zum einen der zum Verlegen der Kabellitzen benötigte Freiraum. Zum anderen besteht die Gefahr einer falschen Schaltung, insbesondere dann, wenn über die Steckkontakteinrichtung nicht nur die reine Stromversorgung erfolgen soll, sondern auch weitere Elemente mit dem Motor verbunden werden sollen.

Die DE-A-29 23 456 zeigt eine Klemmenplatte bzw. ein Klemmbrett, aber keinen Steckverbinder. Mittels des Klemmbrettes sollen Wicklungsenden von elektrischen Maschinen mit den Enden eines Netzanschlusses verbunden werden. Ausgehend vom Stand der Technik liegt der Entgegenhaltung die Aufgabe zugrunde, ein Klemmbrett dahingehend zu verbessern, daß das Anklemmen der Wicklungsenden und des Netzanschlusses erleichtert wird. Dazu sind im Sockel des Klemmbrettes an zwei einander gegenüberliegenden Seiten sich in Richtung der Mitte des Klemmbrettes erstreckende Ausnehmungen vorgesehen, die schlitzartige Führungen aufweisen, in die Ränder von Druckplatten eingeschoben sind. Die Druckplatten weisen Mittenbohrungen sowie Aussparungen auf, welche von flachen Kontaktzungen von Klemmbügeln durchsetzt sind. Die Klemmbügel sowie die Druckplatten werden dabei von Klemmschrauben durchsetzt. Seitlich zur Steckrichtung zwischen dem Klemmbügel und der Druckplatte werden die Enden der Wicklungen bzw. der Anschlußleitung eingelegt. Durch Anziehen der Klemmschrauben werden diese dann festgelegt. Hierbei handelt es sich aber nach wie vor um ein Klemmbrett und nicht um einen Steckverbinder. Es ist also davon auszugehen, daß die Leiterenden der Wicklungen und des Netzanschlusses einzeln mit dem Klemmbrett verbunden werden.

Die CH-A-177 721 zeigt eine elektrische Steckvorrichtung, bei der der Stecker außer den beiden Stromstiften mindestens einen etwas längeren Erdungsstift besitzt. Hierbei handelt es sich also einfach um eine Steckvorrichtung aus Stecker und Steckdose.

Ein Motoranschlußblock nach der DE-A-39 34 981 besteht aus einem elektrisch isolierenden Träger in Form eines Gehäuses, in dem Einführschlitze für Kabellitzen ausgebildet sind, und im Gehäuse reihenklemmenartig nebeneinander angeordneten Anschlußkörpern, wobei jeweils zwei auf gegenüber liegenden Seiten des Gehäuses angeordnete Anschlußkörper elektrisch miteinander verbunden sind. Die Anschlußlitzen sind durch Schraubklemmen in den Anschlußkörpern festklemmbar. Nachteilig bei dieser Ausgestaltung eines Motoranschlußblocks ist insbesondere, daß der Anschluß und die Verschaltung nur durch Lösen der elektrischen Leitungen und Trennen der Motorschaltung möglich ist.

Ebenfalls bekannt sind Steckverbinderkombinationen bestehend aus je einem Ober- und Unterteil mit je einem eigenen Schutzgehäuse, deren Unterteile mit dem Motorgehäuse fest verschraubt werden können, so daß ein Trennen des Motors von seinen Anschlußleitungen einfach und schnell möglich ist.

Bei derartigen Steckverbinderkombinationen sind die Einführungsschlitze für die Kabellitzen auf der den Steckkontakten gegenüberliegenden Seite des Stecker- bzw. des Buchseneinsatzes befindlich. Zwischen diesen und dem Gehäuseboden befindet sich in der Regel ein Freiraum zum Verlegen der Kabellitzen.

Nachteilig bei dieser Ausführung sind der erhebliche Platzbedarf, der sich aus dem Anbau derartiger Steckverbinderkombinationen ergibt, sowie die exponierte Anordnung der Steckverbinderkombination gegenüber schädlichen äußeren mechanischen Krafteinwirkungen.

Der Erfindung liegt die Aufgabe zugrunde, ausgehend von der GB-A-960 831 unter Vermeidung der genannten Nachteile einen Motoranschlußblock der gattungsgemäßen Art zu schaffen, bei dem bei einem Minimum an Platzbedarf eine Vielzahl von elektrischen Schaltungen einfach, schnell und sicher realisiert werden können.

Erfindungsgemäß wird die genannte Aufgabe bei einem Motoranschlußblock der gattungsgemäßen Art durch die kennzeichnenden Merkmale des Anspruchs 1 gelöst.

Durch die erfindungsgemäße Ausgestaltung werden Kabellitzen, die zusammengehören, beispielsweise einerseits die Kabellitzen vom Stromnetz, andererseits die mit diesen elektrisch zu verbindenden, zum Motor führenden Kabellitzen übersichtlich von einer Seite in den Motoranschlußblock eingeführt, so daß die Gefahr einer falschen Schaltung wesentlich reduziert wird. Die Kabellitzen sind also den jeweils zugehörigen Hülsen und Stiften eindeutig zuordbar, so daß eine Vielzahl von elektrischen Schaltungen einfach und sicher realisiert werden kann. Auch verringert sich hierdurch der Raumbedarf zum Einführen der einzelnen Kabellitzen erheblich, so daß eine niedrige Bauhöhe bei ausgezeichneter Zugänglichkeit der Leitungsanschlüsse möglich ist. Des weiteren können durch die Vielzahl der Einführschlitze sowie deren Ausbildung mehrere Anschlußkabel, nicht nur für den Motor, sondern auch zur Übertragung von Überwachungssignalen, für die Bremse etc. einfach und sicher eingeführt und den entsprechenden Hülsen und Stiften zugeordnet werden.

Gemäß einer bevorzugten Ausgestaltung ist vorgesehen, daß die Klemmschrauben parallel zu den Steckkontakten ausgerichtet sind. Eine weitere bevorzugte Ausgestaltung sieht vor, daß die paarweise miteinander verbindbaren Klemmkörper in zwei Reihen angeordnet sind. Hierdurch können auf kleinem Raum und damit in einem kleinen Gehäuse eine Vielzahl von elektrischen Schaltungen realisiert werden. Um zu vermeiden, daß das Unterteil und das Oberteil des Motoranschlußblocks falsch zusammengesteckt werden, sieht eine äußerst bevorzugte Ausgestaltung vor, daß Unterteil und Oberteil komplementär, aber asymmetrisch ausgebildet sind.

Eine weitere bevorzugte Ausgestaltung sieht vor, daß zwei diametral angeordnete Kontakte verkürzt ausgeführt werden und einem Stromkreis zugeführt werden, bei dessen Unterbrechung die gesamte Spannungsversorgung des Motors abgeschaltet wird. Dadurch ist sichergestellt, daß beim Abziehen des Steckers die Energiezufuhr zum Motor unterbrochen wird und die Steckkontakte lastfrei getrennt werden.

Die elektrische Sicherheit wird weiterhin erhöht, insbesondere Kriechströme werden ausgeschaltet, wenn in Weiterbildung vorgesehen ist, daß stromführende Teile, insbesondere Steckkontakte und Klemmschrauben durch Kunststoffprofile umfaßt sind.

Damit, wenn die Steckverbinder in Eingriff kommen, ebenfalls schon die Erdungsverbindung hergestellt ist, sieht eine bevorzugte Weiterbildung vor, daß Erdungsschienen sich parallel zu den Steckkontakten im zugehörigen Teil erstrecken und daß die Länge der Erdungsschienen größer als die der Steckkontakte ist, wobei weiterhin vorgesehen sein kann, daß die Erdungsschienen elektrisch leitend mit Befestigungsschrauben der beiden Teile verbunden sind. Hierdurch ist mit der Befestigung von Unterteil und Oberteil mit dem Motor bzw. dessen Stator oder einer Statorplatte bzw. dem Klemmenkastendeckel gleichzeitig eine Erdung der beiden Elemente erfolgt.

Durch die Erfindung wird es möglich, einen erfindungsgemäßen Motoranschlußblock in einen Motoranschlußkasten derart zu integrieren, daß das eine Teil des Motoranschlußblocks, wie der Steckereinsatz, fest mit dem Motor bzw. dessen Statorgehäuse oder einem an diesem ausgebildeten Statorflansch bzw. einer mit diesem verbundenen Zwischenplatte befestigt ist, während das andere Teil, der Buchseneinsatz - in vier möglichen, um jeweils 90° versetzten Lagen -, fest im Anschlußkastendeckel angeordnet ist. Die elektrische Stromversorgung des Motors erfolgt über den Anschlußkastendeckel und den Buchseneinsatz, während mit dem Steckereinsatz die einzelnen Windungen des Motors verbunden sind. In gleicher Weise sind am Buchseneinsatz elektronische Einrichtungen, wie Gleichrichter, Halbleiterschalter, zur Schnellabschaltung für Motorbremsen etc. angeordnet, während die entsprechenden Elemente über den Steckereinsatz verdrahtet sind. Die elektrische Verbindung wird dann erst nach Schließen des Motoranschlußkastens bewirkt, während eine elektrische Trennung durch Öffnen des Motoranschlußkastens erfolgt. Hierdurch wird ein Austausch von Motoren oder aber elektronischer Elemente im Anschlußkastendeckel schnell und einfach sowie sicher möglich.

Die Schaltung des Motors in Stern(y)- bzw. Dreieck-Schaltungen kann in einfacher Weise durch entsprechend ausgebildete Klemmbrücken geschehen, die gegebenenfalls als Wechselklemmbrücken ausgebildet sein können und die motorseitig mit den entsprechenden Litzen in den Klemmkörpern befestigt werden.

Durch die Erfindung wird erreicht, daß die Funktionen Verschalten bzw. Verdrahten einerseits und lösbares Stekken in einem einzigen Bauteil, nämlich dem erfindungsgemäßen Motoranschlußblock, kombiniert werden, wodurch eine Verkleinerung des Motoranschlußkastens erreicht werden kann. Dennoch sind bei niedriger Bauhöhe desselben gute Zugänglichkeit zu den Leitungsanschlüssen gegeben, indem die Steckschrauben bei geöffnetem Motoranschlußblock parallel zu den Steckverbindern zugänglich sind. Dies wird dadurch erreicht, daß die für eine Steckverbindung erforderlichen Stifte und Buchsen im Klemmkörper direkt integriert sind. Diese sind derart gestaltet, daß die gewünschten Motor-Schaltungen durch einfaches Wenden der Wechselklemmbrücke vorgenommen werden können. Der Motoranschlußblock erfüllt die erforderlichen Luft- und Kriechstrecken von spannungsführenden Teilen nach den entsprechenden Vorschriften, da sämtliche spannungsführenden Teile durch die genannten Kunststoffprofile abgedeckt sind, wodurch auch, wie gesagt, ein unbeabsichtigtes Berühren ausgeschlossen ist.

Weitere Vorteile und Merkmale der Erfindung ergeben sich aus den Ansprüchen und aus der nachfolgenden Beschreibung, in der Ausführungsbeispiele des erfindungsgemäßen Motoranschlußblocks unter Bezugnahme auf die Zeichnung im einzelnen erläutert sind. Dabei zeigt bzw. zeigen:

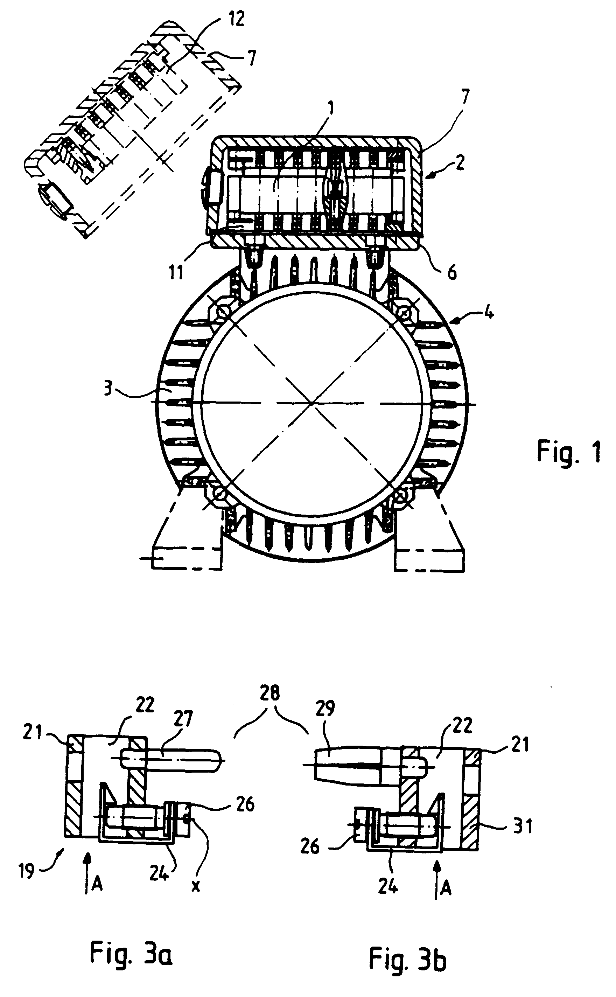

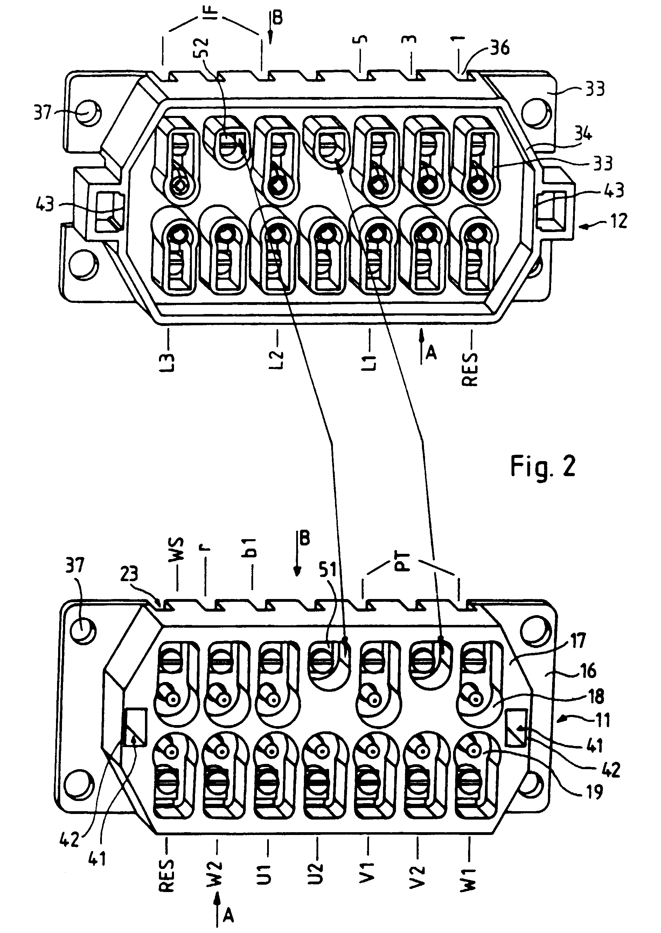

- Figur 1 -: die Anordnung eines erfindungsgemäßen Motoranschlußblocks auf einem Motor;
- Figur 2 -: perspektivisch einen erfindungsgemäßen Motoranschlußblock im geöffneten Zustand;
- Figur 3 -: einen Klemmkörper des Motoranschlußblocks der Figur 2;
und
- Figur 4a-4e -: Schaltbilder verschiedener mit dem erfindungsgemäßen Motoranschlußblock realisierbarer Schaltungen.

Der erfindungsgemäße Motoranschlußblock 1 wird üblicherweise in einem Motoranschlußkasten 2 untergebracht, der üblicherweise an einem Statorgehäuse 3 eines Elektromotors 4 befestigt oder dessen Bestandteil ist. Der Motoranschlußkasten 2 besteht dabei aus einer Zwischenplatte oder einem Statorflansch 6 als Unterteil, welches fest (beispielsweise durch Schrauben) mit dem Statorgehäuse 3 verbunden ist, und einem Anschlußkastendeckel 7, der auf die Zwischenplatte bzw. den Statorflansch 6 aufsetzbar bzw. von der Platte bzw. dem Flansch 6 lösbar ist. Außer dem Motoranschlußblock befinden sich im Motoranschlußkasten gegebenenfalls weitere Steuerelemente für den Elektromotor 4 bzw. eine diesem zugeordnete Elektromagnetbremse, wie beispielsweise ein Gleichrichter 8 für den Bremsenmotor, wobei diese Elemente gegebenenfalls ebenfalls über den Motoranschlußblock verdrahtet sind.

Der Motoranschlußblock 1 besteht aus zwei Teilen, nämlich einem Steckereinsatz 11 und einem Buchseneinsatz 12. Der Steckereinsatz 11 ist fest mit der Zwischenplatte bzw. dem Statorflansch 6 und damit dem Motor verbunden, während der Buchseneinsatz 12 fest mit dem Anschlußkastendeckel 7 verbunden ist. Durch Schließen des Motoranschlußkastens 2 (mittels Aufsetzen des Anschlußkastendeckels 7 auf die Platte bzw. den Flansch 6) werden automatisch im folgenden beschriebene Steckkontakte zwischen Stecker- und Buchseneinsatz des Motoranschlußblocks hergestellt.

Der Steckereinsatz 11 weist eine Befestigungsplatte 16 auf, mit der einstückig der Klemmkörperblock 17 verbunden ist. In dem Klemmkörperblock 17 sind Ausnehmungen 18 vorgesehen, in denen Klemmkörper 19 angeordnet sind. Die Klemmkörper 19 weisen eine Klemmhülse 21 für Kabellitzen auf, deren Hohlraum 22 über seitliche Einführschlitze 23 im Steckereinsatz 11 zum Einführen von Kabellitzen in Richtung der Pfeile A bzw. B zugänglich sind.

Senkrecht zur Einführrichtung A, B sind in den Hülsen 21 mit einem Klemmbügel 24 versehene Klemmschrauben 26 angeordnet. Parallel zur Achse X der Klemmschrauben 26 erstrecken sich von den Hülsen 21 der Klemmkörper 19 Verbindungsstifte 27, die zusammen mit an sie angepaßten Verbindungsbuchsen 29 an Klemmkörpern 31 einen Steckkontakt 28 bilden. Die Klemmkörper 31 weisen ebenfalls den Hülsen 21 entsprechende Einsteckhülsen 21 für Kabellitzen sowie parallel neben den Verbindungsbuchsen 29 angeordnete Klemmschrauben 26 mit Klemmbügeln 24 auf.

Die Klemmkörper 31 sind im Buchseneinsatz 12 angeordnet. Der Buchseneinsatz besteht ebenfalls aus einer Befestigungsplatte 32 und sich senkrecht zu dessen Hauptfläche erstreckenden Profilwandungen 33, 34. Die Profilwandungen 33 umgeben die Klemmkörper 31 und sind derart ausgebildet, daß sie in die die Klemmkörper 19 umgebenden Ausnehmungen 18 des Steckereinsatzes 11 einsteckbar sind, so daß die Klemmkörper 19, 31 und die durch deren Stifte 27 und Buchse 29 gebildeten Steckkontakte vollständig durch isolierendes Gehäusematerial umgeben sind. Die Wandung 34 ist an die Form des Klemmenblocks 17 des Steckereinsatzes 11 derart angepaßt, daß beim Zusammenstecken von Steckereinsatz 11 und Buchseneinsatz 12 die Wandung 34 den Klemmenblock 17 umgibt. Das Innere der Hülsen 22 der Klemmkörper 31 ist im Buchseneinsatz 12 durch den Einführschlitzen 23 entsprechende seitliche Einführschlitze 36 zugänglich, durch welche auch hier Kabellitzen entsprechend den Einführrichtungen A, B in die Klemmkörper 31 eingeführt werden können. Die Befestigungsplatten 16, 33 weisen Befestigungslöcher 37 auf, mit denen der Steckereinsatz 11 an der Zwischenplatte bzw. dem Statorflansch 6 und der Buchseneinsatz 12 an der Innenseite der oberen Wandung des Motoranschlußkastendeckels 7 befestigbar sind.

Der Steckereinsatz 11 des Motoranschlußblocks weist an den Stirnseiten des Blockteils 17 sich von der Befestigungsplatte 16 senkrecht erstreckende Einschnitte 41 auf, in denen Erdungsschienen 42 angeordnet sind. In gleicher Weise weist der Buchseneinsatz 12 Erdungsschienen 43 auf, die beim Zusammenstecken von Steckereinsatz 11 und Buchseneinsatz 12 sogleich in Kontakt kommen. Während die Stifte 27 und zugehörigen Buchsen 28 sich lediglich über einen Teil der Höhe des Blockteils 17 bzw. der Wandungen 33, 34 erstrecken, erstrecken sich die Erdungsschienen 42, 43 über die gesamte Höhe des Blockteils 17 bzw. der Wandungen 33, 34, so daß der Kontakt der Erdungsschienen 42, 43 sogleich beim Zusammenstecken von Stecker- und Buchseneinsatz 11, 12 hergestellt wird, während die Kontaktierung über die Stifte 27 und Buchsen 29 erst beim weiteren Aufschieben des Buchseneinsatzes 12 auf den Steckereinsatz 11 erfolgt. In gleicher Weise kommen die Kontaktschienen erst nach Trennen sämtlicher Steckkontakte 27, 29 außer Eingriff. Die Erdungsschienen 42, 43 sind über die durch die Durchbrüche 37 vorgesehenen Schraubbefestigungen derart elektrisch verbunden, daß mit Befestigung des Motoranschlußblocks am Statorflansch bzw. Anschlußkastendeckel gleichzeitig eine Erdung derselben erfolgt.

Die Ausnehmungen 18 mit den in ihnen ausgebildeten Klemmkörpern sowie die Wandungen 33 mit den von diesen umgebenen Klemmkörpern sind derart asymmetrisch im Steckereinsatz 11 bzw. Buchseneinsatz 12 angeordnet, daß ein falsches Zusammenstecken beider Teile 11, 12 verhindert wird. Hierzu sind einzelne Klemmkörper 51, 52 im dargestellten Ausführungsbeispiel ohne Steckkontakte 27, 29 ausgebildet.

Die Steckkontakte 19 des Steckereinsatzes 11 werden mit den entsprechenden Anschlüssen der Motorwicklungen U1, U2, V1, V2, W1, W2 verbunden, während die mit den Wicklungen U1, V1, W1 beim Zusammenstecken von Stecker- und Buchseneinsatz 11, 12 über die Steckkontakte 27, 28, 29 verbundenen entsprechenden Klemmkörper 31 des Buchseneinsatzes 12 mit den Einzelleitern L1, L2 bzw. L3 des Stromnetzes verbunden werden. Ein Klemmkörperpaar (RES) ist zur Reserve vorgesehen. Über die Klemmkörperpaare der anderen Klemmkörperreihe des Motoranschlußblocks können weitere Schaltungen vorgenommen werden, wie beispielsweise die Verdrahtung der Anschlüsse BL, R, BS der Motorbremse des Elektromotors 4 über entsprechende Klemmkörper des Steckereinsatzes 11 mit der im Gehäusedeckel 7 untergebrachten Steuereinrichtung (beispielsweise Gleichrichter) für die Motorbremse (Anschluß 1, 3, 5). Weiterhin kann über Anschlüsse des im Gehäusedeckel gehaltenen Buchseneinsatzes 12 ein elektronischer Schalter zur Schnellentriegelung der Motorbremse verdrahtet werden. Stecker- und Buchseneinsatz können auch vertauscht sein.

Schließlich kann die Schaltung des Motors in Stern(Y)- oder Dreieck-Schaltung über Klemmbrücken, gegebenenfalls in der Ausgestaltung von Wechselklemmbrücken, vorgenommen werden. Die Kontaktstifte der Klemmbrücken werden dabei zusammen mit den entsprechenden Kabellitzen durch die Einführschlitze 23 in den Hohlraum 22 der Klemmhülsen 21 der Klemmkörper 19 des Steckereinsatzes 11 eingeschoben und mittels der Klemmschrauben 26 zusammen mit den eingeführten Kabellitzen festgeklemmt.

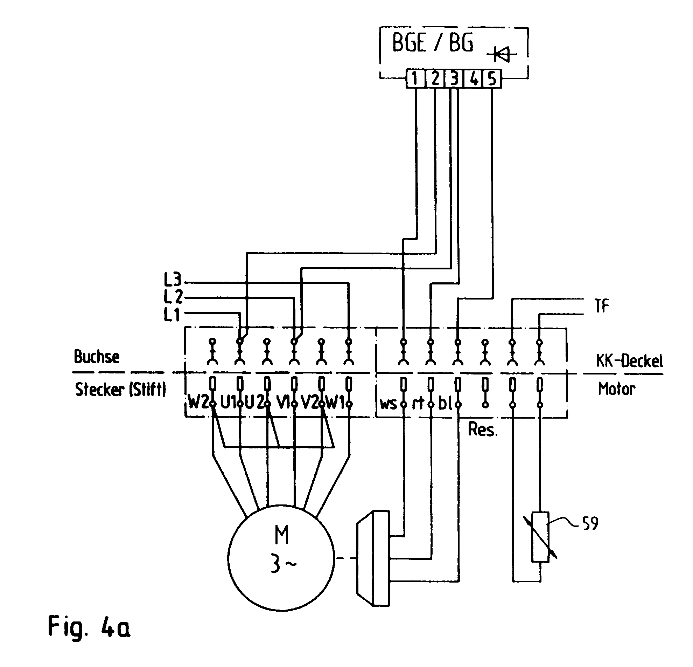

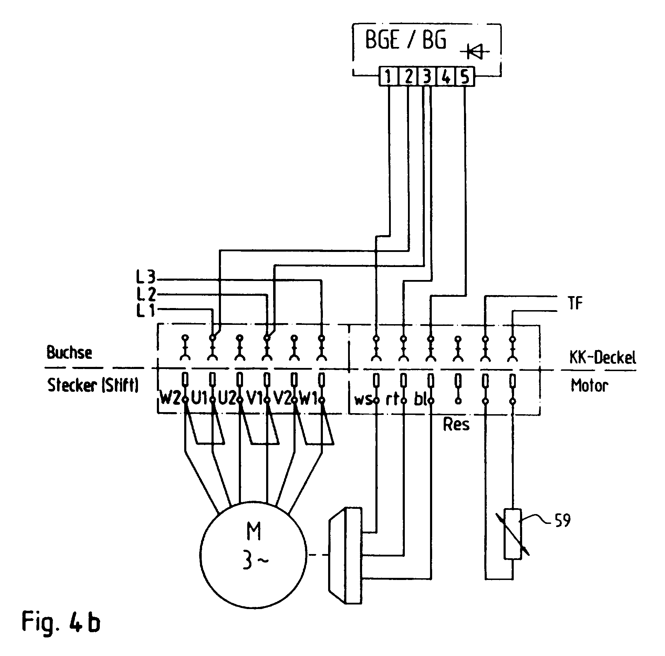

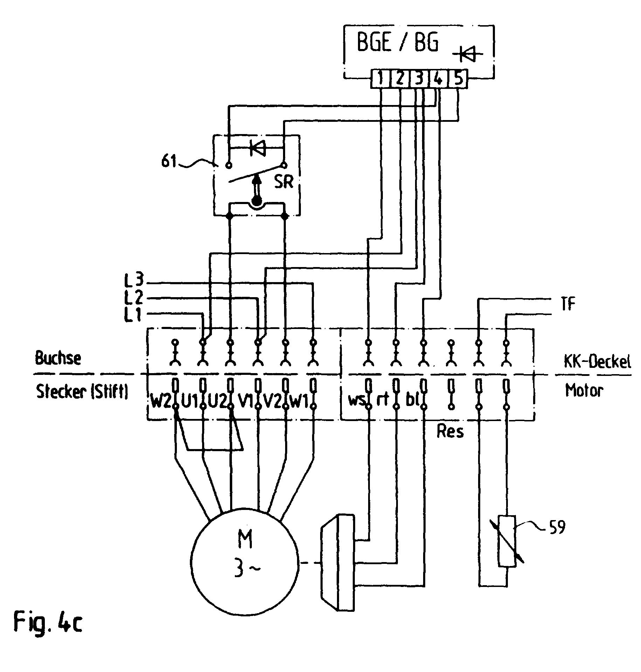

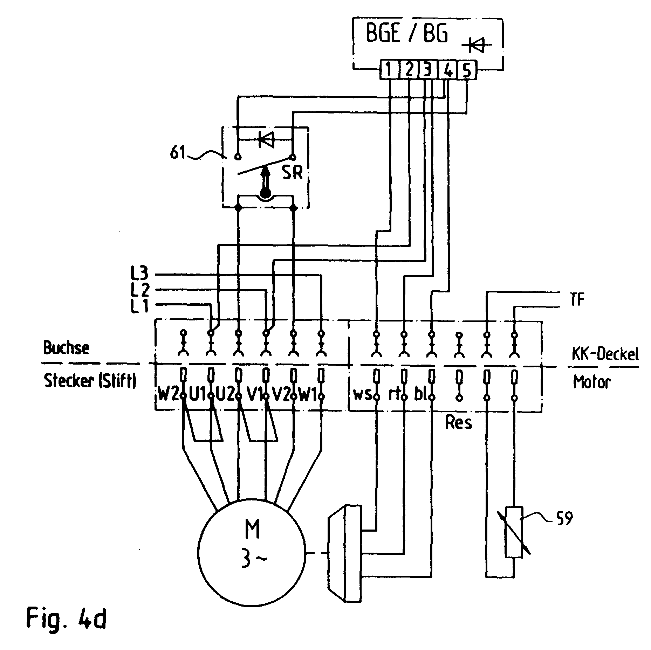

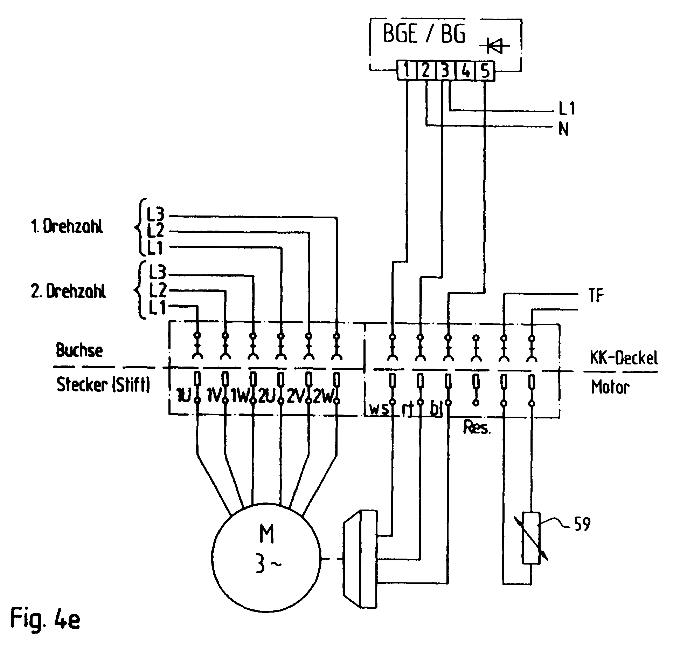

So sind mittels des erfindungsgemäßen Motoranschlußblocks in einfacher Weise die in den Figuren 4a-4e repräsentierten Schaltungen realisierbar. Die Schaltung 4a zeigt einen Motor in y-Schaltung mit Bremse und Temperaturfühler 59, dessen Verdrahtung ebenfalls in entsprechender Weise über den Motoranschlußblock erfolgt. Die Schaltung der Figur 4b zeigt einen entsprechenden Motor in Dreieckschaltung; die Schaltung der Figur 4c zeigt einen Motor in y-Schaltung zusätzlich mit einer elektronischen Schnellabschaltung 61 und die Figur 4d einen Motor in entsprechender Dreieck-schaltung. Die Figur 4e schließlich zeigt einen polumschaltbaren Motor mit getrennter Wicklung und getrennter Bremsspannungsversorgung, während die Bremsspannungsversorgung bei den Ausgestaltungen der Figuren 4a-4d von der Leiterspannung für den Motor her erfolgt.

## Patentansprüche

1. Motoranschlußblock (1) mit einem Stecker- und einem Buchseneinsatz, wobei der Steckereinsatz (11) konstruktiv in einen Motoranschlußkasten integriert ist und der Buchseneinsatz (12) in einem Anschlußkastendeckel konstruktiv so angeordnet ist, daß der Motoranschlußkasten (2) in Funktionseinheit ein Steckergehäuse ausbildet und der Anschlußkastendeckel in Funktionseinheit ein Gehäuse für das Buchsenteil ausbildet und als Träger für eine oder mehrere Verschraubungen für Kabellitzen dient, wobei Anschlußkabel mittels Klemmschrauben festklemmbar sind, dadurch gekennzeichnet, daß Kabellitzen von jeweils miteinander verbindbaren Klemmkörpern (19, 31) von Stecker- und Buchseneinsatz (11, 12) in parallel zueinander und gleichsinnig ausgerichtete Einführschlitze (23, 36) der paarweise verbindbaren Klemmkörper (19, 31) einführbar sind.

2. Motoranschlußblock nach Anspruch 1, dadurch gekennzeichnet, daß Klemmschrauben (26) von Stecker- und Buchseneinsatz (11, 12) parallel zu den Steckkontakten (27, 28, 29) ausgerichtet sind und der Schraubenkopf der Klemmschrauben (26) in Steckrichtung zeigt.

3. Motoranschlußblock nach Anspruch 1, dadurch gekennzeichnet, daß Kabellitzen senkrecht zur Steckrichtung von Stecker- und Buchseneinsatz (11, 12) in Einführungsschlitze (23, 36) der paarweise verbindbaren Klemmkörper einführbar sind.

4. Motoranschlußblock nach einem der vorangehenden Ansprüche, dadurch gekennzeichnet, daß die paarweise miteinander verbindbaren Klemmkörper (19, 31) in zwei Reihen angeordnet sind.

5. Motoranschlußblock nach einem der vorangehenden Ansprüche, dadurch gekennzeichnet, daß Stecker- und Buchseneinsatz (11, 12) komplementär, aber asymmetrisch ausgebildet sind.

6. Motoranschlußblock nach einem der vorangehenden Ansprüche, dadurch gekennzeichnet, daß stromführende Teile, insbesondere Steckkontakte und Klemmschrauben (26, 27, 28, 29) durch Kunststoffprofile (17, 33, 34) umfaßt sind.

7. Motoranschlußblock nach einem der vorangehenden Ansprüche, dadurch gekennzeichnet, daß Erdungsschienen (41, 42, 43) sich parallel zu den Steckverbindern (27, 28, 29) im zugehörigen Teil (11, 12) erstrecken und daß die Länge der Erdungsschienen (41, 42) grösser als die der Steckkontakte (27, 29) ist.

8. Motoranschlußblock nach Anspruch 7, dadurch gekennzeichnet, daß die Erdungsschienen (41, 42) elektrisch leitend mit Befestigungsschrauben der beiden Teile (11, 12) verbunden sind.

## Claims

1. Motor connection block comprising of a connector piece and a bushing piece, wherein the connector piece is integrated constructively in a motor connection casing and the bushing piece is arranged in a constructive way in a connector casing cover, that the motor connection casing, being in a functional unit, forms a connector housing and the connector casing cover as a functional unit forms a housing for the bushing part and serves as carrier for one or more screwed connection joints for cable cords, wherein connector cables are fastenable by means of locking screws, characterized in that the cable cords of clamp bodies (19, 31) of connector and bushing pieces (11, 12) can be inserted into the insertion slots (23, 36) of the clamp bodies (19, 31), where said clamp bodies are parallel to each other and connectable in pairs and said insertion slots are aligned parallel to each other in the same direction.

2. Motor connection block according to claim 1, characterized in that locking screws (26) of the connector piece and the bushing piece (11, 12) are aligned parallel to the plug contacts (27, 28, 29) and the screw head of the locking screws (26) points in the direction of the connection.

3. Motor connection block according to claim 1, characterized in that the cable cords are insertable perpendicularly to the direction of the connection of connector piece and bushing piece (11, 12) into insertion slots (23, 36) of the binding bodies which are connectable in pairs.

4. Motor connection block according to any of the above claims, characterized in that the clamp bodies (19, 31), which are connectable with one another in pairs, are arranged in two rows,

5. Motor connection block according to any of the above claims, characterized in that the connector piece and the bushing piece (11, 12) are complementarily, but asymmetrically, formed.

6. Motor connection block according to any of the above claims, characterized in that the current carrying parts, especially the plug contacts and locking screws (26, 27, 28, 29) are covered with plastic profiles (17, 33, 34).

7. Motor connection block according to any of the above claims, characterized in that earth bars (41, 42, 43) extend parallel to the plug connectors (27, 28, 29) in the corresponding part (11, 12) and that the ground busses [or bars] (41, 42) are longer in length than the plug contacts (27, 29)

8. Motor connection block according to claim 7, characterized in that the ground busses [or bars] (41, 42) are connected with fastening screws of the two parts (11, 12) in an electrically conducting manner.

## Revendications

1. Bloc de connexion-moteur comprenant un insert de fiche mâle et un insert de prise femelle, l'insert de fiche mâle étant intégré de fabrication dans un boîtier de connexion-moteur, et l'insert de prise femelle étant disposé de fabrication dans un couvercle de boîtier de connexion-moteur, de telle sorte que le boîtier de connexion-moteur constitue fonctionnellement un logement pour la pièce mâle de raccordement, et que le couvercle de boîtier de connexion-moteur constitue fonctionnellement un logement pour la pièce femelle de raccordement et sert de support à un ou plusieurs plots à visser pour des brins de câbles, les câbles de connexion étant immobilisables au moyen de vis de serrage, caractérisé en ce que les brins de câble de chaque corps de serrage (19,31) à relier simultanément, respectivement ceux de l'insert de fiche mâle et ceux de l'insert de prise femelle (11,12), peuvent être introduits dans des fentes de guidage (23,36) des corps de serrage (19,31) connectables par paires, disposées parallèles entre elles et de même sens.

2. Bloc de connexion-moteur selon la revendication 1, caractérisé en ce que les vis de serrage (26) de l'insert de fiche mâle et de l'insert de prise femelle (11,12) sont disposées parallèles aux contacts à fiches (27,28,29) et en ce que la tête des vis de serrage (26) est orientée dans la direction de connexion.

3. Bloc de connexion-moteur selon la revendication 1, caractérisé en ce que les brins de câble peuvent être introduits perpendiculairement à la direction de connexion de l'insert de fiche mâle et de l'insert de prise femelle (11,12) dans les fentes de guidage (23,36) des corps de serrage reliables par paires.

4. Bloc de connexion-moteur selon l'une quelconque des revendications précédentes, caractérisé en ce que les corps de serrage (19,31) reliables par paires sont disposés selon deux rangées.

5. Bloc de connexion-moteur selon l'une quelconque des revendications précédentes, caractérisé en ce que l'insert de fiche mâle et l'insert de prise femelle (11,12) sont complémentaires mais conformés de façon asymétrique.

6. Bloc de connexion-moteur selon l'une quelconque des revendications précédentes, caractérisé en ce que les pièces conductrices de l'électricité, en particulier les contacts à fiches et les vis de serrage (26,27,28,29), sont entourées d'un profilé en plastique (17,33,34).

7. Bloc de connexion-moteur selon l'une quelconque des revendications précédentes, caractérisé en ce que des barrettes de terre (41,42,43) s'étendent parallèlement aux contacts à fiches (27,28,29) dans la pièce correspondante (11,12), et en ce que la longueur des barrettes de terre (41,42) est supérieure à celle des contacts à fiches (27,29).

8. Bloc de connexion-moteur selon la revendication 7, caractérisé en ce que les barrettes de terre (41,42) sont reliées de façon électriquement conductrice à des vis de fixation des deux pièces (11,12).
